# EUROPÄISCHE PATENTANMELDUNG

(11) **EP 1 318 164 A1**
(43) Veröffentlichungstag der Anmeldung: **11.06.2003**
(21) Anmeldenummer: 02025167.4
(22) Anmeldetag: 11.11.2002
(51) Int. Cl.: C08J 5/12, B29C 44/06, B32B 31/12

(54) **Quellschweissen von dünnen XPS-Platten**

(30) Priorität: 08.12.2001 DE 10160351
(71) Anmelder: BASF AKTIENGESELLSCHAFT, 67056 Ludwigshafen (DE)
(72) Erfinder: Turznik, Gerhard, Dr., 67269 Grünstadt (DE); Boy, Elmar, 67433 Neustadt (DE); Kreibiehl, Günter, 67063 Ludwigshafen (DE)

(57) **Zusammenfassung**

Die Erfindung betrifft Die Herstellung von dicken XPS-Platten durch Verbinden von dünnen Platten an ihren Hauptflächen, wobei die dünnen Platten mit einem Lösungsmittel für Polystyrol benetzt und anschließend miteinander verpresst werden.

## Beschreibung

Die Erfindung betrifft ein Verfahren zur Herstellung von dicken extrudierten Polystyrol-Schaumstoffplatten (XPS-Platten) durch Verbinden zweier oder mehrerer dünner Platten.

XPS-Platten werden in zunehmendem Maße zum Isolieren von Gebäuden und Gebäudeteilen verwendet. Aufgrund der steigenden Anforderungen an den Wärmeschutz werden immer dickere Platten eingesetzt. Bei der Herstellung dicker XPS-Platten (Dicke von 120 mm oder mehr) sinkt die Anlagenkapazität. Außerdem hat es sich gezeigt, daß dicke XPS-Platten relativ schlechtere Wärmedämmeigenschaften haben als dünne Platten.

Nun wäre es naheliegend gewesen, die Platten einfach mit üblichen Klebern, z. B. auf Polyurethanbasis zu verkleben. Dadurch wäre aber ein artfremdes Material in die Polystyrolplatten eingebracht worden, das beim späteren Recyclieren der Schaumstoffe zu Schwierigkeiten führen würde.

In der DE-A 44 21 016 ist ein Verfahren zur Herstellung dicker, mit CO₂ geschäumter XPS-Platten beschrieben. Dabei werden die Berührungsflächen zweier Platten dadurch miteinander verschweißt, daß man die Plattenflächen durch ein Heizschwert auf 120°C erhitzt und miteinander verpresst. Da die Plattenflächen jedoch nie ganz glatt sind, sondern Unebenheiten aufweisen, schmelzen die Flächen an den erhabenen Stellen stärker an als an den abgesenkten Stellen, so daß die Verschweißung ungleichmäßig wird und von der Seite Wasser eindringen kann. Aus diesem Grund und weil das Verfahren recht aufwendig ist, hat es sich in der Praxis nicht durchsetzen können.

Der Erfindung lag daher die Aufgabe zugrunde, ein einfaches und praxistaugliches Verfahren zur Herstellung von dicken XPS-Platten zu entwickeln, das die genannten Nachteile nicht aufweist.

Diese Aufgabe wird bei dem erfindungsgemäßen Verfahren dadurch gelöst, daß man dünne Platten an den Flächen, an denen sie verbunden werden sollen, mit einem organischen Lösungsmittel für Polystyrol gleichmäßig benetzt, die Schaumstoffoberfläche dadurch anlöst und die Platten anschließend miteinander verpresst.

Bei dem Verfahren werden übliche XPS-Platten einer Dicke von vorzugsweise 50 bis 120 mm eingesetzt, die durch Extrusion einer Mischung von Polystyrol-Schmelze mit einem flüchtigen Treibmittel hergestellt wurden. Geeignete Treibmittel sind Fluor-Kohlenwasserstoffe, z. B. Difluorethan (152a) und Tetrafluorethan (134a), Alkohole, z. B. Ethanol, Kohlenwasserstoffe, z. B. Isobutan und Butan, sowie CO₂ und H₂O. Bevorzugt sind Mischungen dieser Treibmittel.

Diese dünnen Platten werden an den Flächen, an denen sie verbunden werden sollen, mit einem Lösungsmittel benetzt. Geeignete Lösungsmittel sind z. B. Kohlenwasserstoffe, Alkohole, Ketone, Ester, Ether und Lactame, jeweils mit Siedepunkten zwischen 50 und 250°C, vorzugsweise zwischen 70 und 210°C. Bevorzugt wird eine Mischung aus einem guten und einem schlechten Lösungsmittel für Polystyrol, vorzugsweise im Verhältnis 10:1 bis 1:5, insbesondere im Verhältnis 5 : 1 bis 1 : 2. Gute Lösungsmittel sind aromatische Kohlenwasserstoffe, wie Toluol oder Ethylbenzol, halogenierte Kohlenwasserstoffe, aliphatische Ether wie Tetrahydrofuran, Ester wie Ethylacetat, Ketone wie Butanon, Amide und Lactame wie N-Methylpyrrolidon. Schlechte Lösungsmittel sind aliphatische Kohlenwasserstoffe wie Hexan und Alkohole wie Ethanol.

Durch die Mischung zweier verträglicher, eines guten und eines schlechten Lösungsmittels kann die Lösegeschwindigkeit der Plattenoberfläche und damit die Verarbeitungsgeschwindigkeit gezielt eingestellt werden.

Das Benetzen der dünnen Platten mit dem Lösungsmittel kann diskontinuierlich durchgeführt werden, bevorzugt aber kontinuierlich durch Bestreichen, Besprühen oder durch Walzenauftrag. Die aufgebrachte Menge Lösungsmittel beträgt bevorzugt 0,02 bis 0,2 l/m², insbesondere 0,08 bis 0,12 l/m². Werden XPS-Platten eingesetzt, die von der Herstellung her noch eine Schäumhaut aufweisen, sollten größere Mengen Lösungsmittel angewandt werden, bevorzugt 0,15 bis 0,25 l/m². Die Verweildauer des aufgetragenen Lösungsmittels bis zum Verpressen richtet sich nach der Art des Lösungsmittels und dem Mischungsverhältnis. Bei Verwendung der bevorzugten Lösungsmittelgemische beträgt sie 2 sec bis 10 min.

Das Verpressen wird bevorzugt kontinuierlich auf Kalandern oder Walzenpaaren durchgeführt, wobei der Pressdruck zwischen 10 und 200 bar liegen kann; es kann auch diskontinuierlich auf einer Plattenpresse erfolgen.

Die erfindungsgemäß hergestellten dicken XPS-Platten weisen bevorzugt eine Dicke von mehr als 100 mm, insbesondere zwischen 120 und 250 mm auf. Er hat sich überraschenderweise gezeigt, daß erfindungsgemäß hergestellte XPS-Platte eine geringere Wärmeleitung und damit eine bessere Wärmedämmung aufweisen als eine XPS-Platte gleicher Dicke, die direkt durch Extrusion hergestellt wurde.

### Beispiel

Zwei 80 mm dicke XPS-Platten mit einer Dichte von 35 g/l wurden an jeweils einer Fläche, an der die Schäumhaut abgeschält worden war, mit 0,1 l/m² eines Gemisches aus N-Methylpyrrolidon und Ethanol im Gewichtsverhältnis 2:1 gleichmäßig bestrichen. Nach einer Einwirkzeit von 2 min wurden die Platten mit einem Druck von etwa 100 bar diskontinuierlich miteinander verpreßt.

Die Wärmeleitzahl λ dieser Verbundplatte war um 2 mW/m.k niedriger als die einer ebenfalls 160 mm dicken, direkt extrudierten XPS-Platte.

## Patentansprüche

1. Verfahren zur Herstellung von dicken extrudierten Polystyrol-Schaumstoffplatten (XPS-Platten) durch Verbinden zweier oder mehrerer dünner Platten an ihren Hauptflächen, **dadurch gekennzeichnet, daß** man die dünnen Platten an den Flächen, an denen sie verbunden werden sollen, mit einem organischen Lösungsmittel für Polystyrol gleichmäßig benetzt, die Schaumstoffoberfläche dadurch anlöst und die Platten anschließend miteinander verpresst.

2. Verfahren nach Anspruch 1, **dadurch gekennzeichnet, daß** die hergestellten XPS-Platten eine Dicke von mehr als 100 mm, vorzugsweise 120 bis 250 mm haben.

3. Verfahren nach Anspruch 1, **dadurch gekennzeichnet, daß** das Lösungsmittel ein Kohlenwasserstoff, ein Alkohol, ein Keton, ein Ester, ein Ether oder ein Lactam, jeweils mit einem Siedepunkt zwischen 50 und 250°C ist.

4. Verfahren nach Anspruch 3, **dadurch gekennzeichnet, daß** ein Gemisch an einem guten Lösungsmittel für Polystyrol und einem schlechten Lösungsmittel für Polystyrol eingesetzt wird.

5. Verfahren nach Anspruch 1, **dadurch gekennzeichnet, daß** das Lösungsmittel in Mengen von 0,02 bis 0,2 l/m² auf eine Fläche der dünnen XPS-Platten aufgetragen wird.

6. Verfahren nach Anspruch 1, **dadurch gekennzeichnet, dass** die Platten mit einem Pressdruck von 10 bis 200 bar verpresst werden.

7. Verfahren nach Anspruch 1, **dadurch gekennzeichnet, dass** man die Schäumhaut an den Hauptflächen abschält, bevor sie mit dem Lösungsmittel benetzt werden.
